# EUROPÄISCHE PATENTANMELDUNG

(11) **EP 0 618 387 A1**
(43) Veröffentlichungstag der Anmeldung: **05.10.1994**
(21) Anmeldenummer: 93117946.9
(22) Anmeldetag: 05.11.1993
(51) Int. Cl.: F16J 15/12, F16J 15/02

(54) **Dichtung**

(30) Priorität: 25.03.1993 DE 4309652
(71) Anmelder: Pohl GmbH & Co. KG, D-76187 Karlsruhe (DE)
(72) Erfinder: Derksen, Klaus, D-76307 Karlsbad (DE)

(57) **Zusammenfassung**

Dichtung zur Einfügung in den Spalt (1) zwischen zwei axial benachbarten ringförmigen Stützflächen (2, 3) umfassend zwei einander koaxial umschließende, unnachgiebige Stützringe (4, 5) und einen in den Zwischenraum (6) der Stützringe (4, 5) einfügbaren Dichtring (7) aus elastomerem Werkstoff, wobei die Stützringe (4, 5) und der Dichtring (7) die Stützflächen (2, 3) beiderseits anliegend berühren und zwischen den Stützflächen (2, 3) axial verpreßbar sind. Die Stützringe (4, 5) sind durch zumindest einen Steg (8) miteinander verbunden, wobei der Steg (8) den Dichtring (7) in einem Abstand von den Stützflächen (2, 3) durchgreift.

## Beschreibung

Die Erfindung betrifft eine Dichtung zur Einfügung in den Spalt zwischen zwei axial benachbarten ringförmigen Stützflächen, umfassend zwei einander koaxial umschließende, unnachgiebige Stützringe und einen in den Zwischenraum der Stützringe einfügbaren Dichtring aus elastomerem Werkstoff, wobei die Stützringe und der Dichtring die Stützflächen beiderseits anliegend berühren und zwischen den Stützflächen axial verpreßbar sind.

Eine solche Dichtungsanordnung ist aus der DE-OS 24 37 989 bekannt. Der zur Anwendung gelangende Dichtungsring aus Elastomer ist zum Schutz vor unzulässig hohen, mechanischen Beanspruchungen zwischen einem Innenring und einem den Innenring in radialer Richtung mit Abstand umschließenden Außenring angeordnete, wobei der Innen- und der Außenring einen derartigen Querschnitt aufweisen, daß sie den jeweils benachbarten Dichtungsring in seiner Position halten. Der Innen- und der Außenring weisen jeweils auf der dem Dichtungsring zugewandten Seite Ausnehmungen auf, die den Dichtring U-förmig in einem Teilbereich umschließen und dadurch festhalten. Eine weitere Ausgestaltung sieht vor, daß der Innenring und der Außenring auf den einander zugewandten Seiten mit in radialer Richtung vorstehenden Nocken versehen sind, wobei die Nocken einander jeweils auf Lücke zugeordnet sind. Bei dieser Ausgestaltung erstreckt sich der Dichtungsring wellenförmig zwischen den Nocken innerhalb des Spalts. Dabei ist allerdings zu beachten, daß die Herstellung der gesamten Dichtungsanordnung aufwendig und dadurch in wirtschaftlicher Hinsicht wenig befriedigend ist. Die Herstellung der speziell geformten Halteringe ist fertigungstechnisch nachteilig.

Der Erfindung liegt die Aufgabe zugrunde, eine Dichtung der eingangs genannten Art derart weiterzuentwickeln, daß sich eine einfachere uns kostengünstigere Herstellbarkeit der gesamten Dichtungsanordnung, insbesondere der Stützringe ergibt und daß eine Festlegung des Dichtringes zwischen den einander radial umschließenden Stützringen gewährleistet ist, die sich durch eine gute Beständigkeit auszeichnet.

Diese Aufgabe wird erfindungsgemäß bei einer Dichtungsanordnung der eingangs genannten Art mit den kennzeichnenden Merkmalen von Anspruch 1 gelöst. Auf vorteilhafte Ausgestaltungen nehmen die Unteransprüche Bezug.

Bei der erfindungsgemäßen Dichtung ist es vorgesehen, daß die Stützringe durch zumindest einen Steg miteinander verbunden sind und daß der Steg den Dichtring in einem Abstand von den Stützflächen durchgreift. Hierdurch ist die Herstellbarkeit der gesamten Dichtungsanordnung wesentlich vereinfacht, da die beiden Stützringe bereits räumlich zueinander fixiert sind, bevor der elastomere Werkstoff des Dichtringes in den Spalt eingefügt wird. Der elastomere Werkstoff umschließt den Steg, der die Stützringe miteinander verbindet, so daß im Anschluß an die Erstarrung des elastomeren Werkstoffs eine sichere und adhäsive Verbindung zwischen dem Dichtring und dem Steg besteht. Als Stützringe gelangen bevorzugt polymere Werkstoffe zur Anwendung, da sich die Formgebung der beiden Stützringe und des Stegs, verglichen mit Teilen aus metallischen Werkstoffen, wesentlich vereinfacht. Die Maßhaltigkeit ist ganz besonders groß. Zweckmäßig werden bei der Herstellung in einem ersten Schritt die Stützringe mit dem Steg als Einheit erzeugt, gefolgt von einem zweiten Schritt, in dem der Dichtring an die Einheit angeformt wird.

Gemäß einer vorteilhaften Ausgestaltung können die Stützringe durch mehrere gleichmäßig in Umfangsrichtung verteilte Stege miteinander verbunden sein. Bei Verwendung von zumindest 3 Stegen ist von Vorteil, daß Kipp- und Verdrehbewegungen der beiden Stützringe in bezug auf einander zuverlässig ausgeschlossen werden. Außerdem ist von hervorzuhebender Bedeutung, daß der elastomere Werkstoff durch die Vielzahl der Stegelemente weitgehend formstabil innerhalb des radialen Spaltes zwischen den beiden Stützringen gehalten wird. Die Montage der Dichtung zwischen den ringförmigen Stützflächen der gegeneinander abzudichtenden Teile ist durch diese Ausgestaltung wesentlich vereinfacht. Montagebedingte Beschädigungen des Dichtringes sind durch diese Ausgestaltung minimiert.

Die Stützringe können aus Polypropylen oder Polyäthylen bestehen, jedoch bedarfsweise auch aus Polyester oder Phenolharz. Bevorzugt gelangt ein Kunststoff zur Anwendung, der auch unter Druckbeaufschlagung nur eine vernachlässigbar geringe Kriechneigung aufweist. Ferner ist von Vorteil, daß die Stützringe ein gutes Gleitverhalten auf den Stützflächen aufweisen. Dies ist insbesondere dann sinnvoll, wenn die Dichtung zur Abdichtung von Schraubenverbindungen genutzt werden soll. Die abzudichtenden Schraubenverbindungen können durch den reibungsverringernden Werkstoff der Stützringe mit einem exakt definierten Drehmoment angezogen werden. Die axialen Abmessungen der Stützringe, bezogen auf die Dicke des Dichtringes sind so zu wählen, daß ein gutes Abdichtungsergebnis während einer langen Gebrauchsdauer erhalten bleibt und eine stets ausreichende Vorspannung des Dichtringes in axialer Richtung gewährleistet ist. Eine radiale Verlagerung während der Verschraubung kann nicht zur Zerstörung des Dichtrings führen.

Der Dichtring kann aus einem thermoplastischen, elastomeren Werkstoff bestehen. Es können beispielsweise Ringe mit O-förmige gestanztem Profil zur Anwendung gelangen. Hierbei ist von Vorteil, daß auch nach einer langen Gebrauchsdauer eine sichere Abdichtung gewährleistet ist. Davon abweichende Formen, beispielsweise Dichtringe mit rechteckigem oder achteckigem Querschnitt sind ebenfalls denkbar, wobei die Form und der Werkstoff des zur Anwendung gelangenden Dichtringes von den jeweiligen Gegebenheiten des Anwendungsfalles, wie beispielsweise dem zu haltenden Druck und/oder dem abzudichtenden Medium abhängig sind.

Zur Erzielung eines weiter verbesserten Abdichtungsergebnisses kann es vorgesehen sein, daß zumindest ein weiterer Dichtring radial innerhalb des inneren Stützringes vorgesehen ist, wobei der weitere Dichtring seinerseits einen weiteren Stützring radial außenseitig umschließt und wobei der innere Stützring und der weitere Stützring durch zumindest einen weiteren Steg miteinander verbunden sind, der den weiteren Dichtring in einem Abstand von den Stützflächen durchgreift. Diese Ausgestaltung bedingt zwei in radialer Richtung mit Abstand zueinander benachbarte Dichtbereiche und dadurch eine bedarfsweise größere Sicherheit gegen eine unerwünschte Leckage.

Neben der zuvor beschriebenen Abdichtung von Schraubenverbindungen kann die Dichtung auch dann zur Anwendung gelangen, wenn Verschlußkappen gegen Behälteröffnungen abgedichtet werden sollen. Dazu kann es vorgesehen sein, daß der am weitesten innenliegende Stützring eine Durchtrittöffnung aufweist, die durch eine Dichtscheibe verschlossen ist. Die Dichtscheibe und der am weitesten innenliegende Stützring können einstückig ineinander übergehend ausgebildet sein, was im Hinblick auf eine einfache Fertigung der Dichtung von hervorzuhebender Bedeutung ist. Die Dichtscheibe überdeckt in diesen Fällen die Mündung des Behälters, so daß der Inhalt gegen die Umgebung hermetisch abgedichtet ist. Die Dichtscheibe besteht in diesen Fällen ebenso, wie der in radialer Richtung benachbarte Stützring aus einem polymeren Werkstoff.

Die Dichtscheibe kann zumindest eine mit einem Infusionsspike durchstechbare Schwachstelle aufweisen, wobei der abzudichtende Behälter als Medikamentenflasche ausgebildet ist. Die Dichtscheibe wird in diesen Fällen im Vergleich zu dem in radialer Richtung benachbarten Stützring eine deutlich verringerte Materialstärke aufweisen, so daß eine problemlose Entnahme der Flüssigkeit durch einen Infusionsspike gewährleistet ist.

Die Schwachstelle kann beispielsweise mit zumindest einer Klemmeinrichtung zur flüssigkeitsdichten, selbsthemmenden Festlegung des Infusionsspikes versehen sein. Die Klemmeinrichtung kann beispielsweise durch einen einstückig mit der Dichtscheibe verbundenen Wulst gebildet sein, der den eingestochenen Infusionspike unter radialer Vorspannung dichtend umschließt. Insbesondere zur Abdichtung von Medikamentenflaschen ist eine derartige Ausbildung von Vorteil, da eine im Behälter befindliche Flüssigkeit auch denn entnommen werden kann, wenn dieser über Kopf angeordnet ist eine zusätzliche Halterung für den Infusionsspike nicht vorgesehen ist. Bevorzugt ist die wulstförmige Klemmeinrichtung bereits ein Bestandteil der Schwachstelle, so daß sie in radialer und axialer Richtung elastisch nachgiebig den Infusionsspike umschließt.

Eine derart ausgebildete Dichtung gelangt beispielsweise im Bereich der Mündung einer Infusionsflasche zur Anwendung. In einem derartigen Falle sind die in axialer Richtung mit Abstand zueinander benachbarten Stützflächen aus unterschiedlichen Werkstoffen. Die Medikamentenflasche besteht zumeist aus Glas oder einem polymeren Werkstoff, wobei als Verschluß ein Bördelkappe, beispielsweise aus Aluminium zur Anwendung gelangt. Die Verspannung der Dichtung in axialer Richtung erfolgt über die Bördelkappe, die den Flaschenhals der Infusionsflasche unter axialer Vorspannung formschlüssig umgreift.

Der Gegenstand der vorliegenden Erfindung wird nachfolgend anhand der Zeichnungen weiter verdeutlicht.

In den Fig. 1 bis 3 ist ein erstes Ausführungsbeispiel der erfindungsgemäßen Dichtung gezeigt, wobei
in Fig. 1 die Dichtungsanordnung in quergeschnittener Darstellung gezeigt ist,
in Fig. 2 in einer perspektivischen Darstellung und
in Fig. 3 während der bestimmungsgemäßen Verwendung zur Abdichtung einer Schraubenverbindung.

In Fig. 4 ist ein zweites Ausführungsbeispiel gezeigt. Die Dichtung im Bereich der Mündung einer Infusionsflasche angeordnet ist.

In Fig. 5 ist eine drittes Ausführungsbeispiel gezeigt, wobei zwei mit radialem Abstand zueinander benachbarte Dichtringe zur Anwendung gelangen.

In Fig. 6 ist eine Draufsicht auf die Dichtung aus Fig. 1 gezeigt.

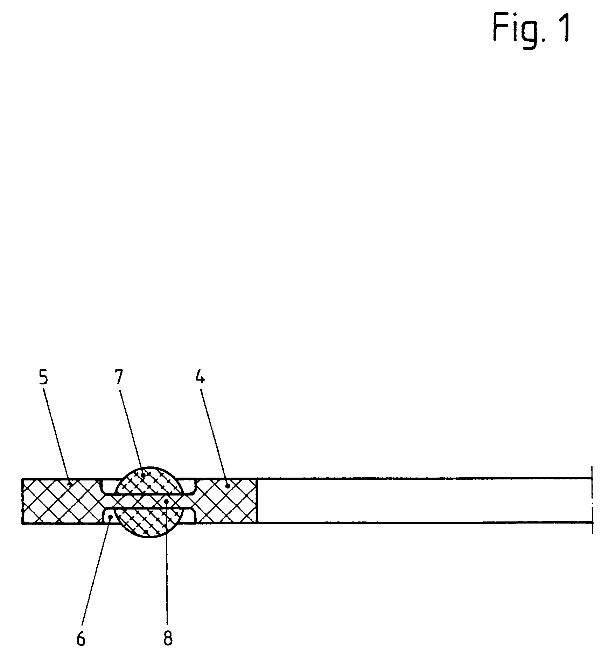

Das erste Ausführungsbeispiel der erfindungsgemäßen Dichtungsanordnung gemäß der Fig. 1 bis 3 umfaßt einen inneren Stützring 4 und einen der inneren Stützring 4 mit radialem Abstand umschließenden äußeren Stützring 5, die einander im wesentlichen konzentrisch zugeordnet sind. Innerhalb des Zwischenraumes 6 zwischen dem inneren Stützring 4 und dem äußeren Stützring 5 ist ein Dichtring 7 angeordnet, der in diesem Ausführungsbeispiel O-Ring-förmig ausgebildet ist und aus einem elastisch nachgiebigem Werkstoff besteht. Der innere Stützring 4 und der äußere Stützring 5 sind durch einen Steg 8 miteinander verbunden, der den Zwischenraum in radialer Richtung überbrückt. Die Dichtung umfaßt mehrere Stege 8.1, 8.2, .... die bevorzugt gleichmäßig in Umfangsrichtung verteilt sind. Der Dichtring 7 weist in axialer Richtung eine Dicke auf, die größer ist, als die Dicke der in radialer Richtung beiderseits benachbart angeordneten Stützringe 4,5. Die Stege 8 durchgreifen den Dichtring 7, wobei die Stege eine geringere Ausdehnung in axialer Richtung aufweist als die in radialer Richtung beiderseits angrenzenden Stützringe 4, 5. Die axial benachbarten Oberflächen des Steges weisen einen geringeren Abstand in axialer Richtung voneinander auf, als die Oberflächen der Stützringe 4, 5 die direkt an benachbarte Stützflächen der abzudichtenden Maschinenelemente angrenzen. Durch diese Ausgestaltung ist eine ausreichende elastische Nachgiebigkeit des Dichtringes 7 gewährleistet und die Montage des Dichtringes 7 deutlich vereinfacht. Der Dichtringt 7 und die Stege 8 sind adhäsiv miteinander verbunden. In diesem Ausführungsbeispiel bestehen die beiden Stützringe 4, 5 aus einem polymeren Werkstoff, der gute Gleiteigenschaften aufweist.

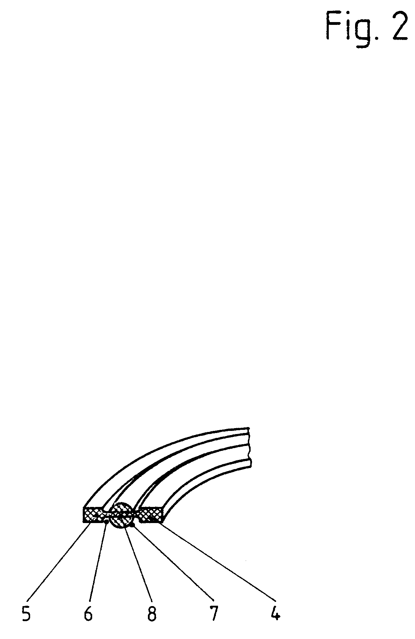

In Fig. 2 ist die Dichtung aus Fig. 1 in perspektivischer Darstellung gezeigt.

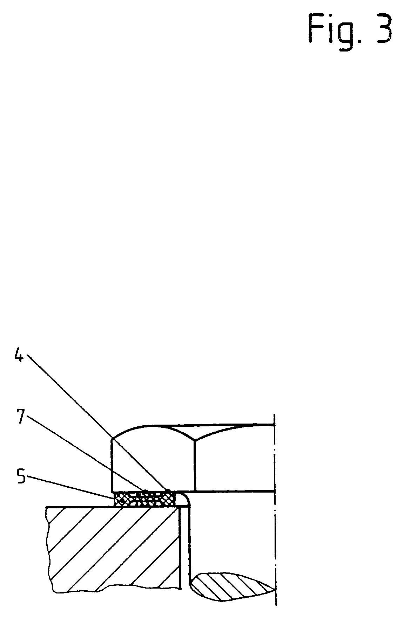

In Fig. 3 ist die Verwendung der Dichtung aus Fig. 1 zur Abdichtung einer Schraubenverbindung gezeigt. Der innere und der äußere Stützring 4, 5 die dem Dichtring 7 in radialer Richtung beiderseits benachbart zugeordnet sind, begrenzen seine elastische Verformung in axialer Richtung und verhindern dadurch eine mechanische Überbeanspruchungen des elastomeren Werkstoffes. Der Zwischenraum 6 zwischen den beiden Stützringen 4, 5 ist derart bemessen, daß er das verdrängte Material des Dichtringes aufzunehmen vermag. Sowohl während der Montage als auch während der bestimmungsgemäßen Verwendung der Dichtung sind sich der innere und der äußere Stützring 4, 5 sowie der innerhalb des Zwischenraumes 6 angeordnete Dichtring 7 in stets gleicher Weise zugeordnet.

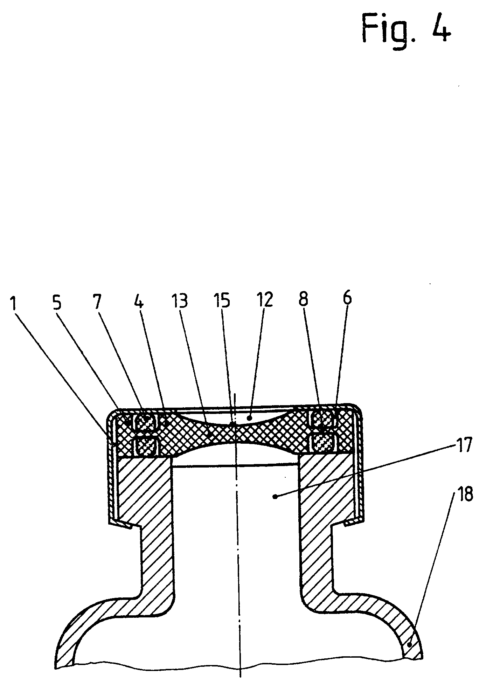

In Fig. 4 ist ein zweites Ausführungsbeispiel gezeigt, bei dem die Dichtung im Bereich der Mündung 17 einer Infusionsflasche 18 angeordnet ist. Der innere Stützring 4 begrenzt eine Durchtrittsöffnung 12, die durch eine Dichtscheibe 13 verschlossen ist. Die Dichtscheibe 13 und der in radialer Richtung angrenzende innere Stützring 4 sind einstückig ineinander übergehend ausgebildet. Im Zentrum der Dichtscheibe 13 ist eine Schwachstelle 15 angeordnet, die durch eine relativ verringerte Materialstärke gekennzeichnet ist, so daß sie beispielsweise von einem hier nicht dargestellten Infusionsspike durchstochen werden kann. Der Spalt 1 wird in axialer Richtung einerseits durch den Flaschenhals der Infusionsflasche 18 begrenzt und andererseits durch eine Bördelkappe aus einem metallischen Werkstoff, die den Flaschenhals unter axialer Vorspannung umgreift. Aus der axialen Vorspannung resultiert eine elastische Verformung des Dichtringes 7 innerhalb des Zwischenraums 6 zwischen dem inneren und dem äußeren Stützring 4, 5 und eine Abdichtung in diesem Bereich.

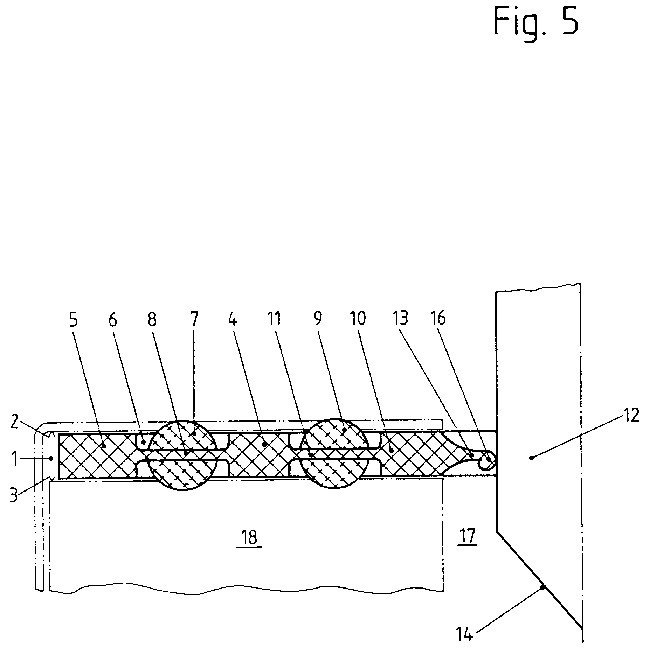

In Fig. 5 ist ein drittes Ausführungsbeispiel gezeigt, das dem Ausführungsbeispiel aus Fig. 1 ähnlich ist. Zusätzlich zu den beiden Stützringen 4, 5 ist ein weiterer Stützring 10 vorgesehen, der radial innerhalb des inneren Stützringes 4 angeordnet ist. Mit radialem Abstand benachbart ist innerhalb des Dichtringes 7 ein weiterer Dichtring 9 angeordnet, der einen weiteren Steg 11, der sich zwischen dem inneren Stützring 4 und dem weiteren Stützring 10 erstreckt, teiflweise umschließt. Mit strichpunktierten Linien sind in diesem Ausführungsbeispiel der Flaschenhals der Infusionsflasche 18 dargestellt und eine Bördelkappe, wie in Fig. 4. Der Spalt 1 zwischen diesen beiden Teilen ist in axialer Richtung einerseits durch die Stützfläche 2 an der Bördelkappe und in axialer Richtung andererseits durch die Stützfläche 3 des Flaschenhalses gebildet. Die Dichtung selbst ist im nicht eingebauten Zustand gezeigt. Die Mündung 17 der Infusionsflasche 18 ist von einer Dichtscheibe 13 überdeckt, die einstückig mit dem weiteren Stützring 10 verbunden ist. Zur Abdichtung des Infusionsspikes 14 ist eine Klemmeinrichtung 16 vorgesehen, die wulstartig ausgebildet ist und unter radialer Vorspannung den Umfang der Kanüle dichtend umgreift. Die radiale Vorspannung ist derart gewählt, daß eine Flüssigkeitsentnahme aus der Infusionsflasche 18 auch im hängenden Zustand ermöglicht wird, ohne daß es einer sekundären Halterung für den Infusionspike 14 bedarf.

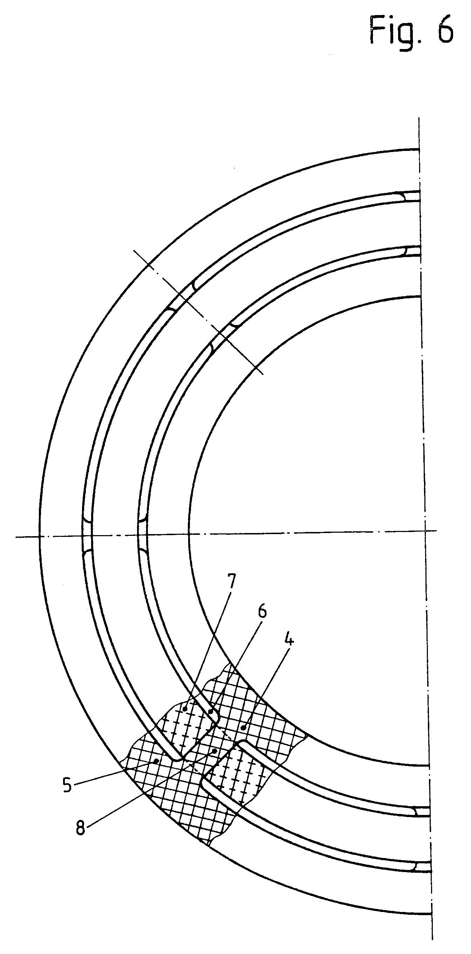

In Fig. 6 ist eine Draufsicht auf die Dichtung aus Fig. 1 gezeigt. Der innere und der äußere Stützring 4, 5 begrenzen den Dichtring 7 in radialer Richtung beiderseits, wobei zumindest im nicht eingebauten Zustand in radialer Richtung beiderseits des Dichtringes 7 ein Abstand zu den angrenzenden Stützringen 4, 5 verbleibt. Der bei der Montage verdrängte elastomere Werkstoff des Dichtringes 7 kann sich dadurch in den Zwischenraum 6 verlagern, ohne daß er einer zu hohen, schädlichen Belastung ausgesetzt ist. Die beiden Stützringe 4, 5 sind durch einen Steg 8 miteinander verbunden, wobei in diesem Ausführungsbeispiel acht gleichmäßig in Umfangsrichtung verteilte Stege vorgesehen sind. Durch diese Ausgestaltung ist eine gute räumliche Zuordnung sämtlicher Teile der Dichtung gewährleistet. Eine einfache Montage, sowie eine Minimierung von Montagefehlern ist dadurch bedingt.

## Patentansprüche

1. Dichtung zur Einfügung in den Spalt zwischen zwei axial benachbarten ringförmigen Stützflächen, umfassend zwei einander koaxial umschließende, unnachgiebige Stützringe und einen in den Zwischenraum der Stützringe einfügbaren Dichtring aus elastomerem Werkstoff, wobei die Stützringe und der Dichtring die Stützflächen beiderseits anliegend berühren und zwischen den Stützflächen axial verpreßbar sind, dadurch gekennzeichnet, daß die Stützringe (4, 5) durch zumindest einen Steg (8) miteinander verbunden sind, und daß der Steg (8) den Dichtring (7) in einem Abstand von den Stützflächen (2, 3) durchgreift.

2. Dichtung nach Anspruch 1, dadurch gekennzeichnet, daß die Stützringe (4, 5) durch mehrere, gleichmäßige in Umfangsrichtung verteilte Stege (8) miteinander verbunden sind.

3. Dichtung nach Anspruch 1 bis 2, dadurch gekennzeichnet, daß die Stützringe (4, 5) aus Polypropylen oder Polyäthylen bestehen.

4. Dichtung nach Anspruch 1 bis 3, dadurch gekennzeichnet, daß der Dichtring (7) aus einem thermoplastischen, elastomeren Werkstoff besteht.

5. Dichtung nach Anspruch 1 bis 4, dadurch gekennzeichnet, daß zumindest ein weiterer Dichtring (9) radial innerhalb des inneren Stützringes (4) vorgesehen ist, der seinerseits einen weiteren Stützring (10) radial außenseitig umschließt und daß der innere Stützring (4) und der weitere Stützring (10) durch zumindest einen weiteren Steg (11) miteinander verbunden sind, der den weiteren Dichtring (9) in einem Abstand von den Stützflächen (2, 3) durchgreift.

6. Dichtung nach Anspruch 1 bis 5, dadurch gekennzeichnet, daß der am weitesten innenliegende Stützring (10) eine Durchtrittsöffnung (12) aufweist, die durch eine Dichtscheibe (13) verschlossen ist.

7. Dichtung nach Anspruch 6, dadurch gekennzeichnet, daß die Dichtscheibe (13) und der am weitesten innenliegende Stützring (10) einstückig ineinander übergehend ausgebildet sind.

8. Dichtung nach Anspruch 6 bis 7, dadurch gekennzeichnet, daß die Dichtscheibe (13) zumindest eine mit einem Infusionsspike (14) durchstechbare Schwachstelle (15) aufweist.

9. Dichtung nach Anspruch 8, dadurch gekennzeichnet, daß die Schwachstelle (15) mit zumindest einer Klemmeinrichtung (16) zur flüssigkeitsdichten, selbsthemmenden Festlegung des Infusionsspikes (14) versehen ist.

10. Verwendung der Dichtung nach Anspruch 6 bis 8 im Bereich der Mündung (17) einer Infusionsflasche (18).
